# FASCICULE DE BREVET EUROPEEN

(11) **EP 1 385 713 B1**
(45) Date de publication et mention de la délivrance du brevet: **22.09.2010**
(21) Numéro de dépôt: 02761854.5
(22) Date de dépôt: 10.04.2002
(51) Int. Cl.: B60J 10/02, B60J 10/00

(54) **VITRE DE FENETRE COLLABLE AVEC CORDON DE DECHIRURE**
MIT ABREISSSCHNUR VERBINDBARE FENSTERSCHEIBE
WINDOW PANE CAPABLE OF BONDING WITH TEAR-AWAY CORD

(30) Priorité: 14.04.2001 DE 10118661
(43) Date de publication de la demande: 04.02.2004
(73) Titulaire: SAINT-GOBAIN GLASS FRANCE, 92400 Courbevoie (FR)
(72) Inventeur: ORTEN, Thomas, 52159 Roetgen (DE); BISCHOF, Thomas, 52074 Aachen (DE); CORNILS, Gerd, 52399 Merzenich (DE); KOLF, Dietmar, 52066 Aachen (DE)
(74) Mandataire: Cardin, Elise
(86) Numéro de dépôt international: PCT/FR2002/001248
(87) Numéro de publication internationale: WO 2002/083445

(56) Documents cités:
- DE-C- 19 613 259
- FR-A- 2 649 654
- FR-A- 2 716 416
- US-A- 5 069 012
- US-A- 5 261 718

## Description

L'invention concerne une vitre de fenêtre apte à être collée et dotée d'un cordon de déchirure, qui présente les caractéristiques du préambule de la revendication 1. Une vitre de ce type est connue de EP 0 307 316 B. Par cordon de déchirure, on désigne ici globalement aussi des fils et similaires appropriés jouant le même rôle.

A partir de DE-T2-689 11 272 (= EP 0 367 662 B1), on connaît une fenêtre de véhicule collée et dotée d'un cordon de déchirure prémonté. Le cordon de déchirure est constitué d'un matériau très résistant. Il est posé dans un cordon profilé en matière synthétique qui adhère directement à la surface de la vitre de fenêtre concernée. Le cordon profilé sert de base à un cordon de colle qui relie la vitre de fenêtre de manière non libérable à la bride de l'encadrement. Par traction sur le cordon de déchirure, on peut séparer le cordon profilé suivant sa longueur, ce qui supprime également indirectement la liaison entre le cordon de colle (qui continue d'adhérer à l'encadrement) et la vitre de fenêtre. La vitre proprement dite peut ensuite être enlevée de l'encadrement sans être détruite.

Déjà dans cette configuration reprise au préambule, une attention très particulière a été consacrée à limiter la force de séparation qui doit être éventuellement surmontée par le cordon de déchirure. Une rupture précoce du cordon relativement mince par une sollicitation excessive doit être empêchée. Pour cette raison, dans un mode de réalisation de cet état de la technique, le cordon de déchirure est posé dans une rainure longitudinale du cordon profilé qui, si on le souhaite, peut être ultérieurement remplie de matière synthétique après la pose du cordon. La rainure constitue une diminution de la section transversale, à savoir un emplacement de future déchirure, car elle définit la section transversale à séparer. Dans d'autres modes de réalisation, la largeur de la surface d'adhérence du cordon profilé sur la vitre de fenêtre est limitée par des couches spéciales de séparation.

On connaît également une autre vitre de fenêtre similaire (DE-A1-37 30 345) dans laquelle un cordon de colle destiné à coller la vitre sur un encadrement est également appliqué sur un cordon profilé en matière synthétique qui lui-même adhère à la surface de la vitre. Dans le mode de réalisation de la figure 6 de ce document, ce cordon profilé peut comprendre une rainure qui sert à poser un cordon de déchirure, cette rainure étant ouverte du côté de la surface de la vitre non tournée vers le côté du cordon profilé et n'étant pas orientée vers le cordon de colle. De ce fait, si des forces de traction agissent sur le cordon de déchirure, il faut surmonter la résistance (à la déformation) de la paroi de la rainure située entre le cordon et le cordon de colle ainsi qu'un frottement non négligeable, et ensuite, il faut en pratique tirer le cordon transversalement par rapport à l'ouverture de la rainure, pour l'en faire sortir et le faire pénétrer dans le cordon de colle.

Dans de telles configurations, une condition essentielle du fonctionnement de l'agencement de l'adhésif sur le cordon profilé est une bonne adhérence mutuelle des deux matériaux qui peuvent par exemple être tous deux préparés à base de polyuréthane.

Dans une forme connue plus ancienne (DE-A1 33 32 232), le cordon de déchirure est posé dans un canal fermé d'un profilé décoratif ou d'étanchéité qui s'étend parallèlement à un cordon de colle le long du bord d'une vitre de fenêtre, mais sans liaison d'adhérence sur le bord de la vitre. En un emplacement, ce cordon de déchirure est amené vers l'intérieur à travers le cordon de colle, où il forme une prise pour l'application des forces de séparation nécessaires.

On connaît également (DE-A1-34 09 903) l' intégration directe d'un tel cordon de déchirure dans le cordon de colle, par exemple par pose simultanée pendant l'-extrusion du cordon de colle qui relie de manière non libérable la vitre de fenêtre à la bride de l'encadrement. A partir du brevet DE-PS-673 951, on connaît la vulcanisation d'un cordon de déchirure dans un encadrement en caoutchouc d'une vitre de fenêtre. Dans ce cas, la totalité de la section transversale du cordon de colle ou de l'encadrement d'étanchéité doit être séparée, ce qui peut nécessiter d'appliquer des forces considérables et impose que le cordon de déchirure présente une haute résistance en traction.

L'objet de l'invention consiste, partant de l'état de la technique mentionnée au début, de créer une autre configuration d'une vitre de fenêtre collée dotée d'un cordon de déchirure.

Selon l'invention, cet objet est atteint avec les caractéristiques des revendications 1 et 5. Les caractéristiques des revendications dépendantes donnent des développements avantageux de cet objet.

Du fait que le cordon de déchirure est maintenant posé dans un évidement ou une rainure du cordon profilé, orienté et ouvert (à l'état monté) vers le cordon de colle, il ne faut au départ pas exercer de force pour séparer ou déformer le matériau relativement résistant du cordon profilé, lequel matériau sert d'écarteur ("spacer") pour obtenir lors du montage une épaisseur définie du cordon de colle qui adhère à la surface de la fenêtre à côté du cordon profilé. Au contraire, toute la force appliquée agit directement sur le cordon de colle. Par ailleurs, on évite ainsi de poser le cordon de déchirure dans le cordon de colle proprement dit avec une mise en oeuvre relativement élevée. Au contraire, on obtient une séparation nette entre la préparation du cordon profilé, la pose du cordon de déchirure dans l'évidement longitudinal préformé et l'application du cordon adhésif. Pour insérer le cordon de déchirure dans l'évidement ou dans la rainure du cordon profilé, on peut utiliser un outil spécial, par exemple un tube de guidage doté d'une pointe d'insertion adaptée à la section transversale de l'évidement. La position correcte de montage du cordon de déchirure peut être vérifiée par un simple contrôle visuel, parce que le cordon de déchirure reste visible sur la vitre prééquipée, non encore montée ni recouverte du cordon de colle. En cas d'erreurs éventuelles de pose, on peut même extraire aisément le cordon de déchirure et le poser de nouveau. On peut ainsi obtenir globalement un travail de qualité élevée et reproductible.

De manière connue en soi, le cordon de déchirure est de préférence préparé en une matière synthétique très solide (fibres d'aramide ou similaires) et présentant une faible rigidité intrinsèque.

En principe, il est indifférent que le cordon de colle soit plus proche du bord extérieur de la vitre que le cordon profilé, ou l'inverse. On préférera cependant ce dernier mode de réalisation parce que le cordon de déchirure et sa prise doivent être accessibles plutôt depuis l'intérieur du véhicule.

Il n'est pas absolument nécessaire de faire passer le cordon de déchirure à travers le cordon de colle fondamentalement en au moins un endroit, parce que l'on peut également penser à d'autres moyens pour appliquer en cas de besoin des forces (de séparation) sur le cordon de déchirure, et ce pourrait être par exemple une décomposition partielle locale du cordon de colle en un emplacement éventuellement marqué au moyen d'un outil approprié, pour ensuite saisir le cordon de déchirure. De préférence, on fera cependant passer le cordon de déchirure proprement dit, ou une prise qui y est reliée fixement, à travers le cordon de colle pour permettre un actionnement manuel rapide du cordon de déchirure.

Dans un mode de réalisation avantageux, les matériaux du cordon profilé et du cordon de colle sont accordés l'un à l'autre de telle sorte que l'adhésif n'adhère pas au cordon profilé. Ainsi, l'adhésif est de préférence préparé à base de polyuréthanne, par exemple de préférence un PU à un composant durcissant à l'humidité de l'air. On peut également utiliser des polymères durcissant par l'humidité à base de silane modifié (polymères MS). Le cordon profilé est constitué de manière connue en soi d'un élastomère thermoplastique (TPE) qui n'entre pas en liaison d'adhérence avec l'adhésif. Sous le terme générique de TPE, on rassemble par exemple en tant que groupes de matériaux le TPE-S (SBS, SEBS), le TPE-O, le TPE-U, le TPE-V et le TPE-A. Le livre allemand "Rômpp Lexikon Chemie", 10ème édition, pages 4506 et 4507, en donne un aperçu. Des polypropylènes ou polyéthylènes pourraient également être utilisés comme matériaux pour le cordon profilé.

On peut également prévoir que le cordon profilé passe en dessous de parties du cordon de colle et de limiter ainsi la largeur de la base adhérente de l'adhésif à la surface de la vitre, c'est-à-dire en direction du bord extérieur de la vitre de fenêtre. Il est alors évident de faire passer le cordon de déchirure directement dans la plus petite section transversale du cordon de colle. On obtient ce résultat de préférence en ce que la surface d'une partie du cordon profilé qui passe en dessous du cordon de colle se prolonge en l'évidement recevant le cordon de déchirure. On forme ainsi dans la région du contact sans adhérence entre l'adhésif et le cordon profilé une sorte de rampe par laquelle le cordon de déchirure peut être amené sans grande résistance directement dans la zone d'adhérence de l'adhésif à la surface de la vitre. Il est évident que même lorsque cette largeur de la base d'adhérence est contrôlée, il faut assurer une force de maintien et une étanchéité suffisantes de la vitre de fenêtre montée.

L'évidement prévu pour le cordon de déchirure peut aisément être découpé en contre-dépouille de telle sorte que le cordon puisse être monté immédiatement après la préparation du cordon profilé et sans risque de tomber.

De manière connue en soi, le cordon profilé peut être doté latéralement de lèvres et/ou d'un profil de recouvrement de fente qui débordent au-delà du bord de la vitre, ou éventuellement être réalisé d'un seul tenant avec ces derniers. De tels appendices complètent la fonction d'écarteur du cordon profilé par les fonctions d'un accessoire de centrage lors du montage (automatisé) de la vitre de fenêtre et d'un recouvrement complet d'un interstice résiduel entre le bord de la vitre et l'encadrement fixe.

Il est évident que le cordon de déchirure ne doit pas entourer la totalité de la périphérie de la vitre de fenêtre, et qu'il ne doit s'étendre que sur une distance qui correspond à celle du cordon profilé et du cordon de colle parallèle lorsque ces derniers ne recouvrent pas la totalité du périmètre de la vitre. Cela pourrait par exemple être le cas d'une vitre de véhicule amovible qui, de manière connue, n'est collée que sur un ou deux côtés, l'adhésif assurant en même temps la fonction d'articulation ou de charnière.

D'autres détails et avantages de l'objet de l'invention ressortent du dessin d'un exemple de réalisation et de sa description qui suit.

De manière schématique et agrandie,
la figure 1 représente une section transversale à travers la région de la bordure d'une vitre de fenêtre avec un cordon profilé qui y adhère et un évidement qui y est formé; et
la figure 2 représente la même section transversale après la pose d'un cordon de déchirure dans l'évidement du cordon profilé et l'application d'un cordon de colle parallèlement au cordon profilé.

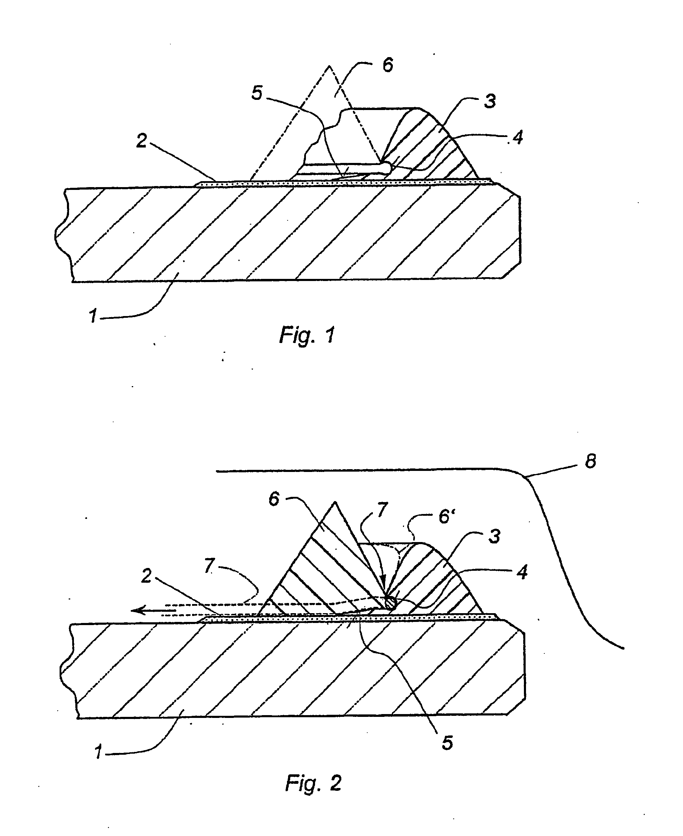

Dans la figure 1, une vitre de fenêtre 1 réalisée en verre ou en matière synthétique est dotée à sa surface, le long de son bord extérieur, d'une bande de bordure opaque 2 qui peut être par exemple cuite à la surface du verre. Sur ce verre, à proximité du bord de la vitre, adhère un cordon profilé 3 qui est de préférence préparé en un élastomère thermoplastique. Il peut être créé par exemple par extrusion ou par injection directe *in situ* sur la surface de la vitre, ou être collé sur la vitre en tant que tronçon profilé préfabriqué. Dans le flanc du cordon profilé 3 qui n'est pas tourné vers le bord de la vitre, on forme selon l'invention un évidement 4 ouvert qui s'étend le long du cordon profilé. Enfin, le cordon profilé 3 comprend encore une partie 5 aplatie ou (ainsi qu'on l'a représenté) en forme de biseau qui s'étend à la surface de la vitre ou sur la bande de bordure 2 en s'éloignant du bord de la vitre. Sa surface libre se raccorde à l'ouverture de l'évidement 4. Ensuite, avant le montage de la vitre de fenêtre, un cordon adhésif 6 (qui n'est représenté ici qu'en trait en chaînette), est appliqué sur une surface de contact également située sur la bande de bordure opaque 2, à côté et parallèlement au cordon profilé 3. Pour améliorer l'adhérence entre le cordon profilé 3 et le cordon de colle 6 d'une part et avec la vitre de fenêtre 1, d'autre part, la bande de bordure 2 peut être recouverte de manière connue d'une couche de fond ou d'un agent d'amélioration de l'adhérence. Ce dernier empêche en outre à la fois une vue directe sur le cordon de colle et sa dégradation par des rayonnements UV.

Un stade ultérieur de fabrication et de production est représenté dans la figure 2. Avant l'application du cordon de colle 6 ou en même temps que cette dernière, un cordon de déchirure 7 est posé sur la longueur du cordon profilé 3, dans un évidement 4 de ce dernier. L'évidement 4 peut être aisément découpé en contre-dépouille. Bien que le cordon de déchirure 7 y soit alors incorporé quasiment en correspondance de forme, il peut en être extrait en n'exerçant qu'une faible force. De plus, comme représenté en trait en chaînette, il peut être sorti transversalement du cordon de colle 6 en au moins un endroit pour offrir un accessoire d'application de forces de traction (indiqué par une flèche) ou pour pouvoir être raccordé à un tel accessoire. Ici, l'accessoire est situé dans l'espace intérieur délimité par la vitre de fenêtre. Il peut par exemple être formé d'un cordon périphérique qui doit alors évidemment être passé deux fois à travers l'adhésif. Dans la région du passage, le cordon de déchirure est en pratique posé sur la surface de contact entre le cordon de colle 6 et la vitre de fenêtre 1.

A l'état monté, le cordon de colle 6 formera une liaison d'adhérence directe entre la vitre de fenêtre 1 et un encadrement 8 ou une bride, uniquement esquissés, d'une ouverture de fenêtre. La vitre de fenêtre 1 peut donc être collée dans l'encadrement d'une ouverture de fenêtre d'une carrosserie de véhicule, pratiquement en affleurement des surfaces, le cordon profilé 3 (éventuellement soutenu par une lèvre élastiquement déformable, non représentée ici, qui forme un collet latéral extérieur) servant d'auxiliaire de positionnement et de centrage.

En dehors de sa surface de contact avec la bande de bordure 2, le cordon de colle recouvre également la partie 5 du cordon profilé et, de préférence, sans que cela soit obligatoire, l'ouverture de l'évidement 4 qui est formé dans le flanc du cordon profilé 3 adjacent au cordon de colle 6. Par un accord approprié entre les matériaux, on évite toute adhérence entre le cordon de déchirure 7 et les parois de l'évidement 4 ainsi qu'entre le cordon de colle 6 et le cordon de déchirure 7, d'une part, et entre le cordon de colle 6 et le cordon profilé 3, d'autre part, et on peut également prévoir éventuellement un recouvrement local par un agent de séparation. De même, il n'y a aucune adhérence dans la région du contact entre l'adhésif 6 et la partie 5 du cordon profilé 3, ainsi qu'entre le cordon profilé 3 et l'encadrement 8. Par la superposition du cordon de colle 6 et de la partie 5 aplatie ou en forme de biseau du cordon profilé, la largeur de collage à la surface de la vitre est définie de façon contrôlée, de telle sorte qu'il ne faut pas craindre une surcharge du cordon de déchirure. De préférence, cette largeur de collage sera de 6 à 10 mm.

A l'état monté ou pendant le montage de la vitre de fenêtre 1, le cordon de colle 6 est déformé plastiquement vers le cordon profilé 3 jusqu'à ce que la pointe du cordon profilé 3 vienne se placer contre l'encadrement 8 et vienne ainsi épouser les flancs du cordon profilé sans y adhérer. Son état de déformation est indiqué par une ligne en pointillé 6'. L'évidement 4 est complètement recouvert, et éventuellement l'adhésif y pénètre même en partie. Entre le cordon de déchirure 7 posé et le cordon de colle 6, il n'y a également aucune adhérence.

Il ressort des deux figures que l'évidement 4 est disposé dans une gorge à angle obtus située entre la partie 5 et le flanc du cordon profilé 3 qui remonte en s'éloignant de la surface de la vitre. Le joint de séparation entre ledit flanc et le cordon profilé 6 augmente en opposition à la direction de déplacement souhaitée du cordon de déchirure 7. Lors de son extraction hors de l'évidement 4 dans le sens de la flèche, le cordon de déchirure trouve donc en pratique dans le joint séparant la partie 5 et le cordon de colle 6 dans le sens de la plus petite résistance une rampe sur laquelle il peut glisser ou être guidé directement sur la surface de contact entre le cordon de colle 6 et la vitre de fenêtre 1 ou sa bande de bordure 2. Lorsque la traction se poursuit, il sépare ainsi le cordon de colle 6 sur toute la périphérie, dans chaque cas dans la mesure qui permet un démontage de la vitre de fenêtre sans la détruire. Dans le cas idéal, seuls de petits restes du cordon de colle continuent d'adhérer à la vitre de fenêtre 1 ou à la bande de bordure 2.

## Revendications

1. Vitre de fenêtre (1), en particulier vitre pour fenêtre d'automobile, destinée à être collée à un encadrement (8) d'une ouverture de fenêtre au moyen d'un cordon de colle (6), comprenant un cordon profilé (3) adhérant à sa surface et doté d'un évidement (4) s'étendant longitudinalement, dans lequel un cordon de déchirure (7) prévu pour la séparation de la liaison collée entre la vitre de fenêtre (1) et l'encadrement (8) est posé, sur la surface de la vitre située à côté du cordon profilé (3), une surface de contact étant prévue pour le cordon de colle (6), la largeur de ladite surface de contact étant délimitée par le cordon profilé (3), ***caractérisée en ce que*** ledit évidement (4) est ouvert en direction de ladite surface de contact.

2. Vitre de fenêtre selon la revendication 1, ***caractérisée en ce que*** le cordon profilé (3) comprend une partie (5) adhérant à la surface de la vitre, apte à être recouverte par le cordon de colle (6) et délimitant la largeur de sa surface de contact avec la vitre de fenêtre (1), et dont la surface non tournée vers la surface de la vitre est adjacente à l'ouverture de l'évidement (4) recevant le cordon de déchirure (7).

3. Vitre de fenêtre selon la revendication 2, ***caractérisée en ce que*** la partie (5) est configurée de manière à descendre en forme de rampe ou de biseau en partant de l'évidement (4) et en direction de la surface de la vitre.

4. Vitre de fenêtre selon l'une des revendications précédentes, ***caractérisée en ce que*** le cordon profilé (3) est doté d'une lèvre élastiquement déformable qui déborde au-delà du bord de la vitre de fenêtre (1).

5. Agencement comportant un encadrement d'une ouverture de fenêtre et une vitre de fenêtre (1) selon l'une des revendications précédentes, ladite vitre de fenêtre (1) étant collée au encadrement (8)
au moyen d'un cordon de colle (6).

6. Agencement selon la revendication précédente, ***caractérisé en ce que*** le matériau et/ou les surfaces du cordon profilé (3), du cordon de colle (6) et du cordon de déchirure (7) sont accordés les uns aux autres de manière à ne pas adhérer l'un à l'autre.

7. Agencement selon la revendication 5 ou 6, ***caractérisé en ce que*** le cordon profilé (3) est constitué d'un élastomère thermoplastique (TPE) et le cordon de colle (6) d'un polyuréthane.

8. Agencement selon l'une des revendications 5 à 7, ***caractérisé en ce qu*'**au moins en un emplacement, le cordon de déchirure (7) est passé à travers le cordon de colle (6) pour former ou poser une prise.

9. Agencement selon l'une des revendications 5 à 8, ***caractérisé en ce que*** le cordon de déchirure est complètement enfermé entre le cordon profilé et le cordon de colle, et en au moins un emplacement, le cordon de colle est doté d'une marque d'un emplacement prévu pour la pose d'une prise sur le cordon de déchirure.

## Claims

1. A window pane (1), in particular a pane for an automobile window, intended to be adhesively bonded to a frame (8) of a window opening by means of an adhesive bead (6), comprising a profiled bead (3) adhering to its surface and provided with a recess (4) extending longitudinally, in which a tear-away cord (7) designed for breaking the adhesive bond between the window pane (1) and the frame (8) is laid, provided on its surface located on the same side as the profiled bead (3) being a contact surface for the adhesive bead (6), the width of said contact surface being bounded by the profiled bead (3), ***characterized* in that** said recess (4) is open toward said contact surface.

2. The window pane as claimed in claim 1, ***characterized in that*** the profiled bead (3) comprises a part (5) adhering to the surface of the pane, capable of being covered by the adhesive bead (6) and defining the width of its contact surface with the window pane (1), and that surface of which not turned toward the surface of the pane is adjacent to the opening of the recess (4) housing the tear-away cord (7).

3. The window pane as claimed in claim 2, ***characterized in that*** the part (5) is configured so as to descend in the form of a ramp or bevel starting from the recess (4) and toward the surface of the pane.

4. The window pane as claimed in one of the preceding claims, ***characterized in that*** the profiled bead (3) is provided with an elastically deformable lip which extends beyond the edge of the window pane (1).

5. Arrangement comprising a window pane (1) as claimed in one of the preceding claims, said window pane (1) being bonded to a frame (8) of a window opening by means of an adhesive bead (6).

6. Arrangement as claimed in the preceding claim, ***characterized in that*** the material and/or the surfaces of the profiled bead (3), of the adhesive bead (6) and of the tear-away cord (7) are matched to each other so that they do not adhere to one another.

7. Arrangement as claimed in claim 5 or 6, ***characterized in that*** the profiled bead (3) is made of a thermoplastic elastomer (TPE) and the adhesive bead (6) is made of a polyurethane.

8. Arrangement as claimed in one of the claims 5 to 7, ***characterized in that*** the tear-away cord (7) is passed, at least at one place, through the adhesive bead (6) in order to form or position a purchase point.

9. Arrangement as claimed in one of the claims 5 to 8, ***characterized in that*** the tear-away cord is completely enclosed between the profiled bead and the adhesive bead and, at least at one place, the adhesive bead is provided with a mark of a place designed for positioning a purchase point on the tear-away cord.

## Patentansprüche

1. Fensterscheibe (1), insbesondere Scheibe zum Einsetzen als Fenster für Kraftwagen, zum Kleben an einen Rahmen (8) einer Fensteröffnung mittels einer Kleberaupe (6), umfassend einen Profilstrang (3), der auf deren Fläche klebt und mit einer sich in Längsrichtung erstreckenden Aussparung (4) versehen ist, in welcher eine Trennschnur (7) angeordnet ist, die zur Trennung der Klebeverbindung zwischen der Fensterscheibe (1) und dem Rahmen (8) vorgesehen ist, wobei auf deren seitlich des Profilstrangs (3) angeordneten Fläche, eine Kontaktfläche für die Kleberaupe (6) vorgesehen ist, wobei die Breite der Kontaktfläche durch den Profilstrang (3) begrenzt ist, **dadurch gekennzeichnet, dass** die Aussparung (4) in Richtung der Kontaktfläche geöffnet ist.

2. Fensterscheibe nach Anspruch 1, **dadurch gekennzeichnet, dass** der Profilstrang (3) einen auf der Fläche der Scheibe haftenden Abschnitt (5) umfasst, der geeignet ist durch die Kleberaupe (6) bedeckt zu sein und die Breite seiner Kontaktfläche mit der Fensterscheibe (1) begrenzt, und dessen Fläche, die nicht zu der Scheibenfläche gewandt ist, an die Öffnung der Aussparung (4), welche die Trennschnur (7) aufnimmt, angrenzt.

3. Fensterscheibe nach Anspruch 2, **dadurch gekennzeichnet, dass** der Abschnitt (5) derart ausgebildet ist, dass er in Form einer Rampe oder Schrägfläche von der Aussparung (4) und in Richtung der Scheibenfläche abfällt.

4. Fensterscheibe nach einem der vorhergehenden Ansprüche, **dadurch gekennzeichnet, dass** der Profilstrang (3) eine elastisch deformierbare Lippe aufweist, die über den Rand der Fensterscheibe (1) hervorragt.

5. Vorrichtung aufweisend eine Fensterscheibe (1) nach einem der vorhergehenden Ansprüche, wobei die Fensterscheibe (1) an einen Rahmen (8) einer Fensteröffnung mittels einer Kleberaupe (6) geklebt wird.

6. Vorrichtung nach dem vorhergehenden Anspruch, **dadurch gekennzeichnet, dass** das Material und/ oder die Flächen des Profilstrangs (3), der Kleberaupe (6) und der Trennschnur (7) aufeinander in der Art abgestimmt sind, dass sie nicht miteinander verkleben.

7. Vorrichtung nach dem Anspruch 5 oder 6, **dadurch gekennzeichnet, dass** der Profilstrang (3) aus einem thermoplastischen Elastomer (TPE) und die Kleberaupe (6) aus Polyurethan ist.

8. Vorrichtung nach einem der Ansprüche 5 bis 7, **dadurch gekennzeichnet, dass** die Trennschnur (7) zumindest an einer Stelle durch die Kleberaupe (6) hindurchführt, um einen Griff zu bilden oder zu legen.

9. Vorrichtung nach einem der Ansprüche 5 bis 8, **dadurch gekennzeichnet, dass** die Trennschnur vollständig zwischen dem Profilstrang und der Kleberaupe eingeschlossen ist und die Kleberaupe an mindestens einer Stelle mit einer Markierung einer Stelle versehen ist, um die Legung des Griffs über die Trennschnur vorzusehen.
